# EUROPÄISCHE PATENTANMELDUNG

(11) **EP 1 637 985 A2**
(43) Veröffentlichungstag der Anmeldung: **22.03.2006**
(21) Anmeldenummer: 05018187.4
(22) Anmeldetag: 22.08.2005
(51) Int. Cl.: G06F 3/042

(54) **Eingabesteuerung für Geräte**

(30) Priorität: 16.09.2004 DE 102004044999
(71) Anmelder: Fraunhofer-Gesellschaft zur Förderung der angewandten Forschung e.V., 80686 München (DE)
(72) Erfinder: Krocker, Martin, 01109 Dresden (DE); Schenk, Harald, Dr.-Ing., 01139 Dresden (DE)
(74) Vertreter: Zinkler, Franz

(57) **Zusammenfassung**

Eine Vorrichtung zum Steuern eines Geräts (51) abhängig von einer Position oder Bewegung eines Objekts (61) in einem Steuerbereich (1) umfasst eine Lichtstrahlbewegungseinrichtung zum Bewegen eines Lichtstrahls in dem Steuerbereich (1) abhängig von einem Lichtstrahlbewegungssignal (111), um den Lichtstrahl über den Steuerbereich (1) zu führen, wobei verschiedene Positionen oder Positionsänderungen des Objekts oder mehrerer Objekte in dem Steuerbereich (1) verschiedenen Reaktionen in dem Gerät (51) zugeordnet sind, einen Lichtsensor (11) zum Erfassen eines reflektierten Lichtstrahls (131, 141, 161, 171), um ein Sensorausgangssignal (121) zu erzeugen, das von dem reflektierten Lichtstrahl (131, 141, 161, 171)) abhängt, und eine Steuersignalerzeugungseinrichtung (41), die ausgebildet ist, um abhängig von dem Lichtstrahlbewegungssignal (111) und dem Sensorausgangssignal (121) ein Steuersignal (151) für das Gerät (51) zu erzeugen, das ausgebildet ist, um in dem Gerät (51) eine Reaktion zu bewirken, die einer Position oder Positionsänderung in dem Steuerbereich (1) zugeordnet ist, die durch das Lichtstrahlbewegungssignal (111) und das Sensorausgangssignal (121) definiert ist.

## Beschreibung

Die vorliegende Erfindung bezieht sich auf eine Vorrichtung zum Steuern eines Geräts abhängig von einer Position oder einer Bewegung eines Objekts in einem Steuerbereich und ein Verfahren zum Steuern eines Geräts abhängig von einer Position oder einer Bewegung eines Objekts in einem Steuerbereich.

Die Verbesserung der Kommunikation zwischen Mensch und Maschine und die Suche nach neuen Eingabetechniken gewinnt bedingt durch immer komplexer werdende Computeranwendungen immer mehr an Bedeutung. Aus diesem Grund ist es ein Ziel vieler technischer Entwicklungen, neben den klassischen Eingabegeräten eines Computers, wie z. B. Tastatur, Graphik-Tablett, Maus etc. und in Entwicklung befindlichen Eingabemethoden, wie Sprach- und Handschrifterkennung, neue, der natürlichen räumlichen menschlichen Kommunikation angepasste Interaktionsmöglichkeiten mit der Maschine zu entwickeln. Hierfür bieten sich die Gestik und Mimik des Menschen auf natürliche Weise an, da diese Ausdrucksformen in der natürlichen Kommunikation zwischen Menschen von großer Bedeutung sind. Um diese Ausdrucksformen des Menschen als Eingabemethode für Computer nutzbar zu machen, müssen Kopf- und Körperbewegungen erkannt und interpretiert werden.

Nahezu alle modernen elektrischen Geräte mit und ohne graphischer Benutzeroberfläche besitzen Eingabegeräte wie Tastatur, Maus oder direkt am Gerät befindliche Tasten oder Schalter zur Bedienung. Sie dienen zum Zeigen und Auswählen von Texten, Bildern oder gar Räumen in virtuellen Realitäten, zur Eingabe von Zeichenfolgen oder zum An- und Ausschalten eines Gerätes. Von all diesen Geräten erwartet man eine hohe Zuverlässigkeit, Robustheit, leichte Bedienbarkeit und Genauigkeit. Alle diese Geräte unterliegen jedoch einem hohem Verschleiß und insbesondere im Außenbereich eingesetzte Bedienelemente einer hohen Verschmutzung. Ein weiterer Nachteil bekannter Lösungen ist die meist indirekte Umsetzung von Finger- bzw. Handbewegungen, z. B. durch Drücken eines mechanischen Schaltelements oder das Bewegen einer Maus, in elektrische Signale. Des weiteren erschweren Ritzen und andere unförmige Oberflächen solcher Geräte die Reinigung sowie die Gewährleistung von Keimfreiheit. Des weiteren verlangen Tastaturen nach relativ viel Platz und Mäuse nach einer glatten bzw. kontrastreichen Oberfläche. Ein weiterer Nachteil ist, dass meistens die Eingabegeräte maximal zweidimensional arbeiten und den Benutzer in seinen natürlichen Bewegungen einschränken und meist als externe Zusatzgeräte ausgeführt sind. Des weiteren sind auch virtuelle Steuergeräte bekannt, die die Ausdrucksformen der menschlichen Gestik interpretieren und diese in Befehle zur Steuerung von Datenverarbeitungssystemen umwandeln.

Computermäuse sind in erster Linie elektrische Geräte, die ihre eigenen, durch die Hand des Bedieners verursachten, Bewegungen detektieren und in ein elektrisches Signal umwandeln, welches die aktuelle Koordinaten der Maus repräsentiert. Hauptbestandteil der Maus ist eine Kugel, die an der Unterseite des Mausgehäuses über die Mausarbeitsfläche geführt wird. Die beweglich gehaltene Kugel überträgt die Bewegung der Maus im Gehäuseinneren auf Andruckrollen. Diese walzenförmig gestalteten Rollen sind in einem 90° Winkel angeordnet. Je nach Bewegungswinkel dreht sich nur eine Walze oder beide. Es wird damit erkennbar, in welche Richtung die Maus bewegt wurde. Am Ende der Walzen sind Plastikrädchen angebracht, in die speichenförmig Draht eingebettet ist. Diese Rädchen drehen sich mit der Walze um ihre Achse. Dabei wird die Drehbewegung in elektrische Impulse umgewandelt. Die Umwandlung der Bewegung in elektrische Impulse wird entweder mechanisch über Kontaktstifte oder optoelektronisch über Lichtschranken realisiert. Im PC werden die über das Mauskabel erhaltenen elektrischen Impulse dann in x- und y-Koordinaten für den Mauszeiger am Monitor umgesetzt. Am hinteren Teil der Maus, für die Finger der Hand gut erreichbar, liegen zwei, eventuell drei Maustasten. Über diese werden, ist der Mauszeiger entsprechend positioniert, durch Anklicken Programmschritte ausgelöst. Rechte und linke Maustaste werden dabei unterschiedlich eingesetzt.

Modernere Mäuse unterscheiden sich hinsichtlich der Bewegungsdetektion darin, dass diese mittels optischer Komponenten realisiert wird. Das optische Abtastsystem erfasst Bewegungen in zwei aufeinander senkrecht stehenden Koordinatenrichtungen. Auf dem Gehäuse der Maus befinden sich häufig eine oder mehrere elektrische Taster für die Eingabe von Befehlen, die in der Regel der Auslösung von Funktionen dienen, welche mit der Stellung oder dem Weg des Cursors auf dem Monitor in Verbindung stehen. Nachteil dieser Lösungen sind die verschleißbehafteten mechanischen Komponenten, die Ritzen und somit Verschmutzung und letztlich die Funktionsgewährleistung. Auch ist man mit solch einem Verfahren auf den zweidimensionalen Bewegungsraum beschränkt.

Ein weiteres Eingabegerät ist die Tastatur. Derzeit bekannte Tastaturen und Bedienfelder bestehen in der Regel aus mechanischen Schaltelementen, welche durch Druck mittels Finger einen elektrischen Kontakt öffnen bzw. schließen. Der Nachteil hierbei sind die bewegten mechanischen Komponenten, die einem hohem Verschleiß unterliegen. Solche Tastaturen und Bedienfelder weisen Ritzen auf, die eine Reinigung erschweren und das Eindringen von Schmutzpartikeln ermöglichen. Es gibt auch Folientastaturen, die eine geschlossene Oberfläche gewährleisten, jedoch aufgrund des verwendeten Materials mechanisch empfindlich sind und den Bedienkomfort einschränken.

Die DE 10211307 zeigt Tastenelemente, die durch einen Lichtleiter hindurch Licht ausstrahlen und über den gleichen Lichtleiter reflektiertes Streulicht wieder einkoppeln und an ein Empfangselement weiterleiten.

Die US 4092640 lehrt ein Schaltelement, das die Antennenwirkung des menschlichen Körpers ausnutzt und durch geeignete elektronische Umsetzung einen Schaltvorgang auslöst.

Es sind auch Geräte bekannt, die Anzeige- und Eingabegerät in einem Gerät vereinen. Als graphische Benutzeroberflächen sind sogenannte Touchscreen-Systeme bekannt. Ein Touchscreen ist ein berührungsempfindlicher Bildschirm, mit dem man per Fingerdruck oder Druck durch ein stiftartiges Element, insbesondere bei kleinen Ausführungen, Schaltvorgänge auslösen kann. Ein Nachteil dieser Technologie sind der mechanische Verschleiß der Touchscreenoberflache sowie der hohe Preis und der geringe Bedienkomfort bei kleinen Ausführungen. Insbesondere für Mobiltelefone sind stossunempfindliche Touchscreens mit einer hinter einem Display des Touchscreens angeordneten Erkennungselektronik zur Erkennung eingegebener Zeichen oder gewählter Menüpunkte bekannt, die allerdings zur Eingabe einen Stift erfordern, der mit an den Touchscreen angepassten passiven elektronischen Komponenten versehen ist. Nachteilig hierbei ist, dass der Benutzer auf den kleinen Stift zur Eingabe angewiesen ist, und bei Verlust des Stiftes das System nicht mehr funktionstüchtig ist.

Eine weitere Möglichkeit Eingabegeräte auszuführen, sind virtuelle Tastaturen. Beispielsweise wurden in der Fachzeitschrift "Elektronik" (Ausgabe 9/2004) virtuelle Tastaturen von dem U.S.-Unternehmen VKB vorgestellt, welche mittels einer roten Laserdiode und entsprechender Optik eine Tastatur auf beliebige Oberflächen projizieren können. Die Detektion, ob eine Taste gedrückt wurde, erfolgt über eine zusätzliche Infrarot-Laserdiode, einen Chipsatz und eine Infrarotkamera. In Richtung der Tastatur ausgesendetes infrarotes Laserlicht wird vom Finger des Bedieners reflektiert und mittels Kamera und Chipsatz ausgewertet.

Auch von der Firma iBIZ Technology bekannte virtuelle Tastaturen, welche ebenfalls in der Fachzeitschrift "Elektronik" (Ausgabe 9/2004) vorgestellt wurden, funktionieren nach dem Prinzip der Projektion mittels roter Laserdiode und Detektion mittels Infrarot-Laserdiode und Kamera.

Die DE 4201934 lehrt Datenverarbeitungssysteme, die durch Ausdrucksformen der menschlichen Gestik gesteuert werden können. Bei diesen Systemen erfolgt die Detektion von Bewegungen des menschlichen Körpers bzw. Teilen davon durch die Aufnahme von Bildern mittels Kamera. Soll dieses System mittels einer virtuellen graphischen Benutzeroberfläche gekoppelt werden, ist hierzu ebenfalls eine zusätzliche Projektionseinheit notwendig.

Die bisher bekannten virtuellen Eingabegeräte arbeiten alle nach dem Prinzip von Bildverarbeitungssystemen wie Kameramesstechnik bzw. Stereoskopie, d. h. mit der flächenhaften Aufnahme von Helligkeitsinformationen mittels Kamera und deren Auswertung. Sollen diese Systeme zur Interpretation einer dreidimensionalen Benutzeroberfläche verwendet werden, ist der Einsatz einer zweiten Kamera (Stereoverfahren) notwendig, was die Komplexität, die Größe und die Anforderungen an die Auswerteelektronik erheblich steigert. Sollen die bekannten Lösungen mit einer virtuellen graphischen Benutzeroberfläche gekoppelt werden, z. B. Tastatur oder Mauspad, ist eine zusätzliche Projektionseinheit notwendig.

Der vorliegenden Erfindung liegt die Aufgabe zugrunde, ein Konzept zum Steuern eines Geräts zu schaffen, das kostengünstig und einfach implementierbar ist.

Diese Aufgabe wird durch eine Vorrichtung gemäß Anspruch 1 und ein Verfahren gemäß Anspruch 15 gelöst.

Die vorliegende Erfindung schafft eine Vorrichtung zum Steuern eines Geräts abhängig von einer Position oder Bewegung eines Objekts in einem Steuerbereich mit folgenden Merkmalen:
einer Lichtstrahlbewegungseinrichtung zum Bewegen eines Lichtstrahls in dem Steuerbereich abhängig von einem Lichtstrahlbewegungssignal, um den Lichtstrahl über den Steuerbereich zu führen, wobei verschiedene Positionen oder Positionsänderungen des Objekts oder mehrerer Objekte in dem Steuerbereich verschiedenen Reaktionen in dem Gerät zugeordnet sind;
einem Lichtsensor zum Erfassen eines reflektierten Lichtstrahls, um ein Sensorausgangssignal zu erzeugen, das von dem reflektierten Lichtstrahl abhängt; und
einer Steuersignalerzeugungseinrichtung, die ausgebildet ist, um abhängig von dem Lichtstrahlbewegungssignal und dem Sensorausgangssignal ein Steuersignal für das Gerät zu erzeugen, das ausgebildet ist, um in dem Gerät eine Reaktion zu bewirken, die einer Position oder Positionsänderung in dem Steuerbereich zugeordnet ist, die durch das Lichtstrahlbewegungssignal und das Sensorausgangssignal definiert ist.

Darüber hinaus schafft die vorliegende Erfindung ein Verfahren zum Steuern eines Geräts abhängig von einer Position oder Bewegung eines Objekts in einem Steuerbereich mit folgenden Schritten:

Bewegen eines Lichtstrahls in dem Steuerbereich abhängig von einem Lichtstrahlbewegungssignal, um den Lichtstrahl über den Steuerbereich zu führen, wobei verschiedene Positionen oder Positionsänderungen des Objekts oder mehrerer Objekte in dem Steuerbereich verschiedenen Reaktionen in dem Gerät zugeordnet sind;

Erfassen eines reflektierten Lichtstrahls und Erzeugen eines Sensorausgangssignals, das von dem reflektierten Lichtstrahl abhängt; und

Erzeugen eines Steuersignals für das Gerät in Abhängigkeit von dem Lichtstrahlbewegungssignal und dem Sensorausgangssignal, um in dem Gerät eine Reaktion zu bewirken, die einer Position oder Positionsänderung in dem Steuerbereich zugeordnet ist, die durch das Lichtsteuerbewegungssignal und das Sensorausgangssignal definiert ist.

Der vorliegenden Erfindung liegt die Erkenntnis zugrunde, dass eine Lichtstrahlbewegungseinrichtung einen Lichtstrahl nacheinander an verschiedenen Positionen in dem Steuerbereich platziert, so dass eine Steuersignalerzeugungseinrichtung, die ein Sensorausgangssignal von einem Lichtsensor zum Erfassen des reflektierten Lichtstrahls empfängt, und basierend auf dem Lichtstrahlbewegungssignal und dem Sensorausgangssignal ein Steuersignal für das Gerät erzeugt, das in diesem eine Reaktion bewirkt, die von einer Position oder Positionsänderung in dem Steuerbereich abhängig ist.

Die vorliegende Erfindung bietet die Möglichkeit, eine Eingabesteuerung für ein Gerät mit wenigen und günstigen Bauteilen zu realisieren. Beispielsweise sind nur eine in ihrer Position veränderbare Lichtquelle, ein Lichtsensor und eine Auswerteelektronik erforderlich, um Tastaturen verschiedenster Konfigurationen zu entwerfen. Diese Tastaturen können so ausgeführt sein, dass jemand mit einem Finger ein bestimmtes Feld auf einer Tischplatte berührt, und von diesem Feld der Lichtstrahl zu dem Lichtsensor reflektiert wird.

Dies zeigt auch die Flexibilität der vorliegenden Erfindung, da beispielsweise die Belegung der Tastenfelder auf der Tischplatte lediglich durch Softwareänderungen in der nachfolgenden Auswerteelektronik realisiert werden kann.

Gleichzeitig unterstreicht dies auch die flexible Einsetzbarkeit, da hierdurch Tastaturen gebaut werden können, bei denen lediglich ein Körperteil oder ein Stift auf einen bestimmten Punkt auf einem Tisch gebracht werden muss. Somit sind auch Tastaturen für behinderte Menschen denkbar, die nicht in der Lage sind, einen Knopf auf einem Eingabegerät zu drücken.

Da in dem System die Zahl der mechanischen Komponenten gegenüber herkömmlichen Systemen deutlich reduziert ist, ist das Eingabegerät gemäß der vorliegenden Erfindung durch eine Wartungsfreiheit gekennzeichnet. Die Zahl der verschleißanfälligen mechanischen Komponenten ist nämlich in der Vorrichtung der vorliegenden Erfindung deutlich reduziert.

Darüber hinaus ermöglicht die vorliegende Erfindung in platzsparender Weise, Eingabegeräte zu bauen, da sie ermöglicht, ein Feld auf einem Tisch als Tastatur zu nützen, ohne dass auf diesem Feld spezielle Vorrichtungen aufgestellt werden müssen. Ein beispielsweise an der Decke montierter beweglicher Lichtstrahl und ein an der Decke montierter Lichtsensor sind ausreichend, um eine Tastatur zu implementieren. Der auf dem Tisch eingesparte Platz kann dann für die Erstellung handschriftlicher Skizzen oder zur Ablage von Arbeitsdokumenten zusätzlich genutzt werden. Um einen einwandfreien Betrieb der Vorrichtung zu gewährleisten, sind diese vor Beginn einer Eingabetätigkeit mittels der Vorrichtung der vorliegenden Erfindung lediglich auf die Seite zu schieben.

Bevorzugte Ausführungsbeispiele der vorliegenden Erfindung werden nachfolgend Bezug nehmend auf die beiliegenden Zeichnungen näher erläutert. Es zeigen:
- Fig. 1: ein Eingabefeld zum Bewegen eines Computercursors;
- Fig. 2: eine numerische Tastatur gemäß der vorliegenden Erfindung;
- Fig. 3: ein Objekterkennungssystem zur Steuerung eines Roboters
- Fig. 4a: eine Lichtstrahlbewegungseinrichtung mit einem mikromechanischen Scannerspiegel; und
- Fig. 4b: eine Detaildarstellung -des mikromechanischen Scannerspiegels.

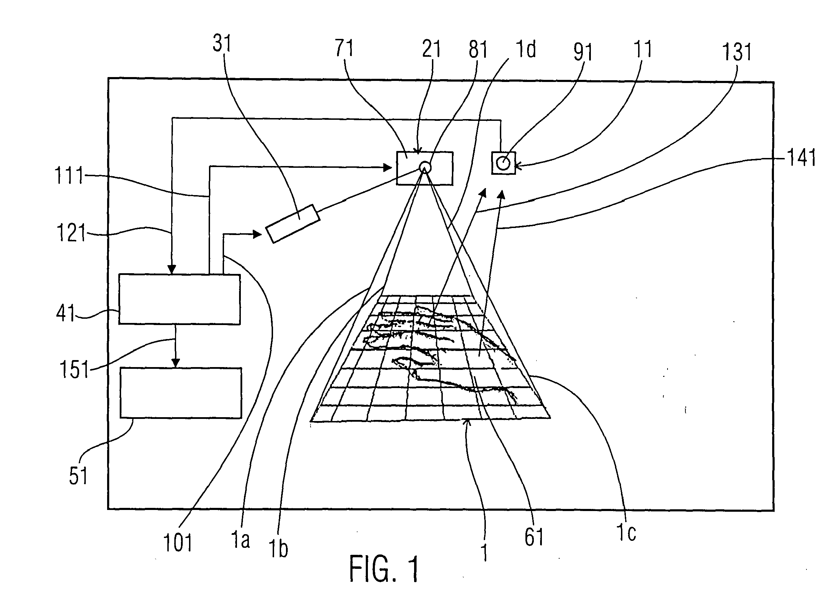

Fig. 1 erläutert eine Computermaus gemäß der vorliegenden Erfindung. In der nachfolgenden Beschreibung der bevorzugten Ausführungsbeispiele werden gleiche oder gleichwirkende Elemente mit den gleichen Bezugszeichen versehen. Dargestellt sind ein Steuerfeld 1, ein Lichtsensor 11, eine Lichtstrahlbewegungseinrichtung 21, ein Laser 31, eine Auswertungseinrichtung 41 und ein Computer 51. Eine Hand 61 bewegt sich auf dem Steuerfeld 1 innerhalb von Steuerfeldgrenzen 1a - d. Die Lichtstrahlbewegungseinrichtung 21 umfasst einen Aktor 71 und einen Spiegel 81, und ist vorzugsweise als ein freihängender mikromechanischer Scannerspiegel auf einem Silzium ausgeführt. Der Lichtsensor 11 besteht u. a. aus einer Photodiode 91.

Die Auswertungseinrichtung 41 steuert über ein Lasersteuersignal 101 den Laser 31 und über ein Lichtstrahlbewegungssignal 111 die Lichtstrahlbewegungseinrichtung 21. Außerdem empfängt sie von dem Lichtsensor 11 das Sensorausgangssignal 121.

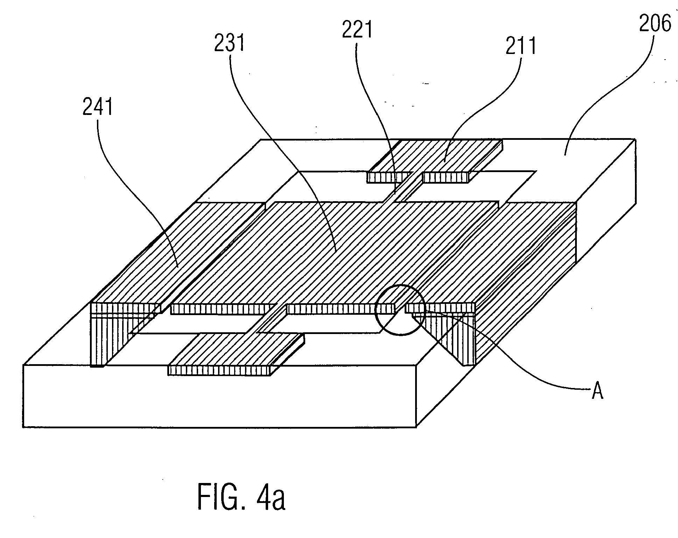

Nach dem Einschalten des Computers 51 schaltet die Auswertungseinrichtung 41 den Laser 31 an. Gleichzeitig beginnt sie ein sich zeitlich änderndes Lichtstrahlbewegungssignal 111 an die Lichtstrahlbewegungseinrichtung 21 zu senden. Auf dieses sich zeitlich ändernde Lichtstrahlbewegungssignal 111 beginnt der Aktor 71, seine Form zu verändern, so dass ein mit dem Aktor 71 mechanisch verbundener Spiegel 81 einen an dem Spiegel 81 reflektierten Lichtstrahl durch das Steuerfeld 1 hindurchführt, bzw. beginnt der freihängende mikromechanische Scannerspiegel seinen.Ausrichtungswinkel zu ändern. Dieser Vorgang wird in Fig. 4a noch eingehender erläutert.

Während der reflektierte Lichtstrahl durch das Steuerfeld 1 hindurchgeführt wird, wird er zu einem ersten Zeitpunkt von einem Mittelfinger der Hand 61 reflektiert, so dass der Mittelfingerlichtstrahl 131 entsteht, und zu einem späteren zweiten Zeitpunkt von einem Punkt auf dem Handrücken reflektiert, so dass der Handrückenlichtstrahl 141 entsteht.

Die Photodiode 91 empfängt zu dem ersten Zeitpunkt den Mittelfingerlichtstrahl 131 und zu dem zweiten Zeitpunkt den Handrückenlichtstrahl 141. Mittels des sich ebenfalls zeitlich ändernden Sensorausgangssignals 121 sendet der Lichtsensor 11 zu dem ersten Zeitpunkt eine Information, dass er den Mittelfingerlichtstrahl 131 empfangen hat, und zu dem zweiten Zeitpunkt eine Information, dass er den Handrückenlichtstrahl 141 empfangen hat.

Da die Auswertungseinrichtung 41 über die Lichtstrahlbewegungseinrichtung 21 die Position des Lichtstrahls in dem Steuerfeld 1 verändert, kann die Auswertungseinrichtung 41 anhand der Zeitpunkte, zu denen sie eine Information über den Mittelfingerlichtstrahl 131 und eine Information über den Handrückenlichtstrahl 141 empfängt, bestimmen, von welcher Position in dem Steuerfeld 1 ein Lichtstrahl zu der Photodiode 91 hin reflektiert worden ist. Somit empfängt die Auswertungseinrichtung 41 örtlich aufgelöste Kontrastwerte. Aus einem Vergleich des Lichtstrahlbewegungssignals 111 und des Sensorausgangssignals kann die Auswertungseinrichtung 41 damit bestimmen, ob sich ein Objekt in dem Steuerfeld 1 befindet, und an welchen Positionen in dem Steuerfeld 1 sich das Objekt befindet. Hierfür werden vorzugsweise bildverarbeitende Algorithmen in der Auswertungseinrichtung 41 eingesetzt.

Da das Steuerfeld 1 von dem von der Lichtstrahlbewegungseinrichtung 21 abgelenkten Lichtstrahl mehrmals in einer Sekunde vollständig durchlaufen wird, ist die Auswertungseinrichtung 41 in der Lage, Positionsänderungen der Hand 61 durch einen Vergleich eines Datensatzes, der während einem zweiten Durchlauf des Steuerfelds 1 erstellt worden ist, mit einem Datensatz, der während einem ersten Durchlauf des Steuerfelds 1 erstellt worden ist, zu ermitteln. Durch den Vergleich der Datensätze von dem zweiten Durchlauf mit dem ersten Durchlauf ist die Auswertungseinrichtung 41 in der Lage, die Positionsänderungen der Hand 61 in dem Steuerfeld 1 zu ermitteln. Sie erzeugt damit ein Computersteuersignal 151, das die Position eines Cursors auf dem Monitor des Computers 51 verändert.

Dabei gibt es verschiedene Möglichkeiten, das Steuerfeld 1 abzutasten bzw. zu scannen. Einerseits kann der Lichtstrahl das Steuerfeld harmonisch überstreichen, das heißt er bewegt sich gleichmäßig von einem Randpunkt auf einer abgetasteten Linie des Steuerfelds 1 zu einem zweiten Randpunkt der Linie des Steuerfelds 1. Andererseits kann der Lichtstrahl aber auch zu diskreten Punkten geführt werden, dort für einen kurzen Moment verweilen und dann auf Veranlassung der Lichtstrahlbewegungseinrichtung zu einem nächsten Punkt des Steuerfelds 1 springen und dort ebenfalls für einen kurzen Moment verweilen.

Die Anordnung in diesem Ausführungsbeispiel ist in der Lage, die Bewegung einer Hand oder eines Fingers zu erkennen und diese in zur Steuerung elektronischer Geräte geeignete elektrische Signale umzuwandeln. Der Aktor 71 ist hierfür bevorzugt kardanisch aufgehängt und wird von der Laserlichtquelle 31 bestrahlt. Eine Ansteuerelektronik in der Auswertungseinrichtung 41 erzeugt mittels elektrisch angeregter Oszillation ein zweidimensionales Scanfeld, das das Steuerfeld 1 umfasst. Das Scanfeld ist hierbei vorzugsweise zeilen- oder spaltenförmig aufgebaut oder auch in anderer geeigneter Art wie z. B. bei einer resonanten Anregung des Ablenkelements bzw. Aktors 71 in Form einer Lissajous-Figur. Das Scanfeld kann dann auf beliebige Oberflächen, z. B. einen Tisch, projiziert werden.

Die von dem Scanfeld erzeugten Reflexionen an der auftreffenden Oberfläche werden mittels des Photodetektors bzw. Lichtsensors 11, dessen Empfindlichkeit vorzugsweise der Wellenlänge des eingesetzten Lasers angepasst ist, detektiert. Die Bewegung einer Hand 61 bzw. eines Fingers der Hand 61 erzeugen durch Reflexion des Laserlichts am Objekt bzw. durch orts- und zeitaufgelöste Hintergrundsintensitätsänderung, Intensitätsänderungen an dem Photodetektor 11, welche durch die Auswertelektronik in der Auswertungseinrichtung 41 in elektrische Signale zur Steuerung eines elektrischen Geräts, wie in diesem Ausführungsbeispiel dem Computer 51, vorzugsweise zur Bewegung eines Mauszeigers einer graphischen Oberfläche umgewandelt werden.

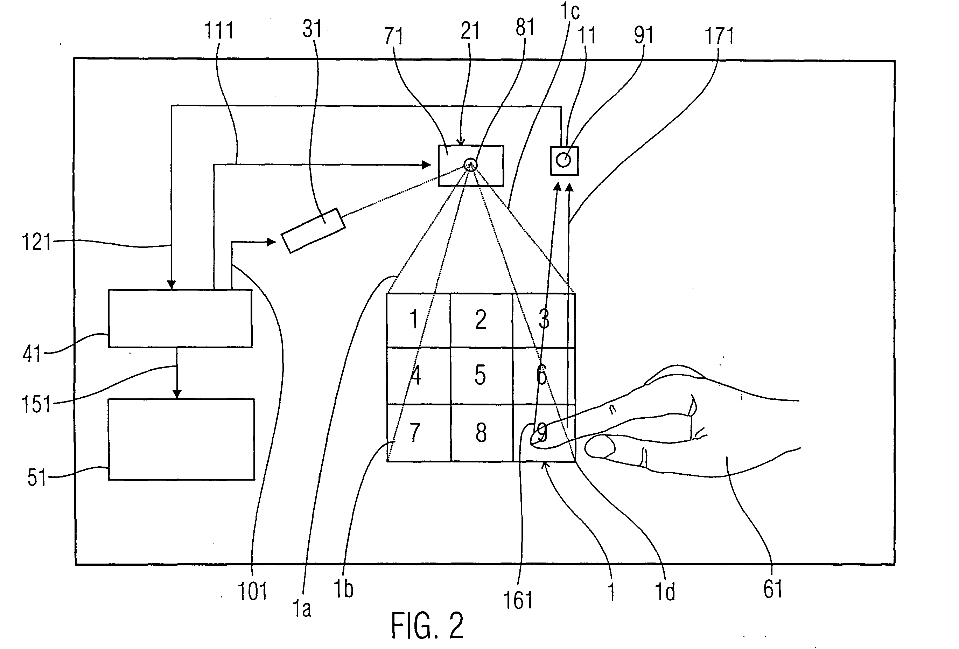

Fig. 2 erläutert ein weiteres Ausführungsbeispiel der vorliegenden Erfindung. Hierbei ist das Steuerfeld 1 als eine numerische Tastatur auf einer ebenen Unterlage, beispielsweise einer Tischplatte, ausgeführt. Die hier in Fig. 2 gezeigte Anordnung entspricht der in Fig. 1 dargestellten Anordnung bis auf den Unterschied in der Konfiguration des Steuerfelds 1.

Die unterschiedliche Konfiguration des Steuerfelds 1 lässt sich alleine durch Veränderungen in der Software der Auswertungseinrichtung 41 realisieren. Dies unterstreicht auch die große Flexibilität der Ausführungsbeispiele der vorliegenden Erfindung.

Ein Zeigefinger einer Hand 61 eines Benutzers ist dabei so in das Steuerfeld 1 eingebracht worden, dass eine Fingerkuppe einen Bereich des Steuerfelds 1 bedeckt, der der Ziffer 9 zugeordnet ist. Ein von der Lichtstrahlbewegungseinrichtung über das Steuerfeld 1 geführter Lichtstrahl wird sowohl von einem Zeigefingernagel reflektiert, so dass ein Zeigefingernagellichtstrahl 161 entsteht, als auch von einem Zeigefingerknöchel reflektiert, so dass ein Zeigefingerknöchellichtstrahl 171 entsteht. Der Zeigefingernagellichtstrahl 161 und der Zeigefingerknöchellichtstrahl 171 werden von dem Lichtsensor 11 in zeitlicher Abfolge detektiert, woraufhin dieser über das Sensorausgangssignal 121 der Auswertungseinrichtung 41 Informationen darüber sendet. Diese Informationen können in der Auswertungseinrichtung 41 beispielsweise mittels eines Prozessors mit dem zeitlichen Verlauf des Lichtstrahlbewegungssignals 111 verglichen werden, wodurch die Auswertungseinrichtung 41 zu dem Ergebnis gelangt, dass eine Fingerkuppe das Zifferfeld der Ziffer 9 bedeckt.

Über das Computersteuersignal 151 teilt die Auswertungseinrichtung 41 dem Computer 51 mit, dass der Benutzer mit der Hand 61 die Ziffer 9 gedrückt hat, und veranlasst eine entsprechende Operation auf dem PC. Diese Operation kann beispielsweise in einem Einfügen einer 9 in einem Textdokument bestehen.

Das Ausführungsbeispiel ist in der Lage, die Bewegung einer Hand oder eines Fingers zu erkennen und diese in zur Steuerung elektronischer Geräte geeignete elektrische Signale umzuwandeln. Bei diesem Ausführungsbeispiel wird jedoch zusätzlich eine virtuelle numerische Tastenanordnung auf eine beliebige Oberfläche projiziert. Die Laserstrahlbewegungseinrichtung 21 ist vorzugsweise hier wieder kardanisch aufgehängt und wird durch den Laser 31 bestrahlt. Auch hier ist die Laserstrahlbewegungseinrichtung 21 mittels eines mikromechanischen Aktors 71 und eines reflektierenden Bereichs auf dem mikromechanischen Aktor 71 ausgeführt. Der mikromechanische Aktor wird durch elektrisch angeregte Oszillation von der Auswertungseinrichtung 41 angesteuert, so dass ein zweidimensionales Scanfeld entsteht, wobei das Scanfeld zeilen- und spaltenweise aufgebaut werden kann oder auch in anderer geeigneter Form, wie z. B. bei Verwendung resonanter Anordnung des Ablenkelements in Form einer Lissajous-Figur. Durch Pulsen der Lichtquelle 31 wird ein beliebiges Muster, z. B. eine virtuelle numerische Tastaturanordnung, auf eine beliebige Oberfläche, z. B. Tisch, projiziert.

Die von dem Scanfeld erzeugten Reflexionen an der auftreffenden Oberfläche werden mittels des Photodetektors 11, dessen Empfindlichkeit vorzugsweise der Wellenlänge des eingesetzten Lasers angepasst ist, detektiert. Das Drücken einer Taste, d. h. das Bewegen des Fingers in einem bestimmten Bereich des Scanfelds 1 auf der projizierten numerischen Tastatur durch einen Finger, erzeugt durch Reflexion des Laserlichts am Objekt bzw. durch orts- und zeitaufgelöste Hintergrundsintensitätsänderungen, Intensitätsänderungen an dem Photodetektor 11, welche durch die Auswertelektronik in der Auswertungseinrichtung 41 in elektrische Signale zur Steuerung eines elektrischen Geräts, wie beispielsweise des Computers 51, oder zur Eingabe von Daten, z. B. eines Geldautomaten, umgewandelt werden.

Durch eine geeignete Laufzeitmessung bei den obigen Ausführungsbeispielen, die in Fig. 1 und Fig. 2 gezeigt sind, lassen sich Rückschlüsse auf die Position oder Positionsänderung der Hand 61 und deren dreidimensionaler Anordnung gegenüber dem Steuerfeld 1 ziehen. Dabei wird eine Laufzeit bestimmt, innerhalb der die Lichtstrahlen den Weg von dem Laser 31 zur Photodiode 91 zurückgelegt haben.

Wenn der Lichtstrahl so über das Steuerfeld 1 geführt wird, dass nur die Verkippung des Spiegels 81 gegenüber dem Steuerfeld 1 geändert wird, so ist die Laufzeit des Lichtstrahls von dem Laser 31 zu dem Spiegel 81 konstant. Die Laufzeitunterschiede ergeben sich dann durch unterschiedliche Weglängen von dem Spiegel 81 zu dem Objekt 61, an dem der Lichtstrahl reflektiert wird, und von dort zu der Photodiode 91. Anhand der Laufzeit des Lichtstrahls von dem Laser 31 zu der Photodiode 91 lassen sich damit Rückschlüsse auf die 3-dimensionale Anordnung der Hand 61 gegenüber dem Steuerfeld 1 ziehen.

Die Laufzeit des Lichtstrahls kann bestimmt werden, indem beispielsweise die Auswerteeinrichtung 41 über das Lasersteuersignal 101 die Modulation des Lichtstrahls des Lasers 31 steuert. Eine Intensität des Lichtstrahls schwankt dabei dann periodisch. Durch einen Vergleich eines periodischen Verlaufs des modulierten Lichtstrahls des Lasers mit zeitlichen Schwankungen des Sensor-Ausgangssignals ermittelt die Auswerteinrichtung 41 die Laufzeit des Lichtstrahls und kann damit die 3-dimensionale Form des in dem Steuerfeld befindlichen Objekts bestimmen.

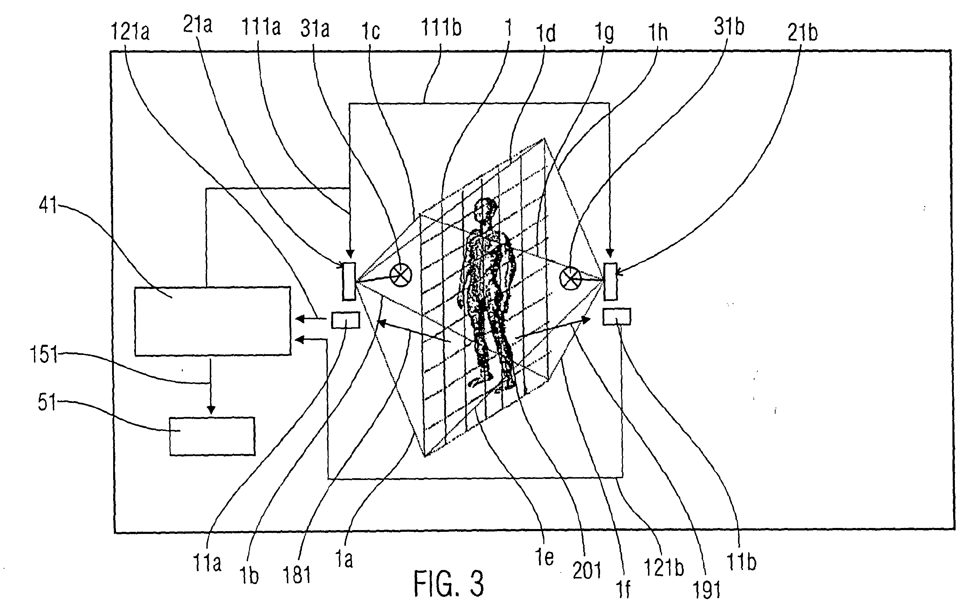

Fig. 3 erläutert ein dreidimensionales Objekterkennungssystem zur Steuerung eines komplexen Roboters. Der Unterschied gegenüber dem in Fig. 1 gezeigten Ausführungsbeispiel besteht darin, dass die Lichtstrahlbewegungseinrichtung 21 als eine erste Lichtstrahlbewegungseinrichtung 21a und eine zweite Lichtstrahlbewegungseinrichtung 21b ausgeführt ist, der Laser 31 als ein erster Laser 31a und ein zweiter Laser 31b ausgeführt ist, und der Lichtsensor 11 als ein erster Lichtsensor 11a und ein zweiter Lichtsensor 11b ausgeführt ist. Ein menschlicher Körper 201 befindet sich in dem Steuerfeld 1.

Die erste Lichtstrahlbewegungseinrichtung 21a wird über ein erstes Lichtstrahlbewegungssignal 111a, die zweite Lichtstrahlbewegungseinrichtung 21b über ein zweites Lichtstrahlbewegungssignal 111b gesteuert. An dem menschlichen Körper 201 werden von den Lichtstrahlbewegungseinrichtungen 21a, 21b bewegte Lichtstrahlen reflektiert, so dass beispielsweise die reflektierten Lichtstrahlen 181, 191 entstehen. Der erste Lichtsensor 11a generiert ein erstes Sensorausgangssignal 121a, während der zweite Lichtsensor 11b ein zweites Sensorausgangssignal 121b erzeugt.

Analog zu dem in Fig. 1 erläuterten Ausführungsbeispiel erzeugt das Ausführungsbeispiel in Fig. 3 aus einem Vergleich des ersten Sensorausgangssignals 121a mit dem ersten Lichtstrahlbewegungssignal 111a ein zweidimensionales. Abbild des Steuerfelds 1. Dieses zweidimensionale Abbild des Steuerfelds 1 wird aber zusätzlich auch von der Seite, auf der die Lichtstrahlbewegungseinrichtung 21b angeordnet ist, mittels eines Vergleichs des zweiten Lichtstrahlbewegungssignals 111b und des Sensorausgangssignals 121b ermittelt. Die Auswertungseinrichtung 41 verfügt damit über zwei annähernd synchron aufgenommene 2D-Abbildungen des Steuerfelds 1, wobei diese zweidimensionalen Abbildungen von zwei unterschiedlichen Seiten aufgenommen worden sind.

Durch eine geeignete Überlagerung der jeweils zweidimensionalen Abbildungen des Steuerfelds 1 lässt sich ein dreidimensionales Abbild von Umrissen des menschlichen Körpers 201 in dem Steuerfeld 1 bestimmen. Aus dem dreidimensional ermittelten Abbild des Steuerfelds 1 lässt sich wiederum ein Computersteuersignal 151 erzeugen, welches einen Computer 51 zur Steuerung eines Roboters ansteuert.

Die Lichtstrahlbewegungseinrichtungen 21a und 21b umfassen zwei kardanisch aufgehängte mikromechanische Aktoren, deren optische Achsen im Winkel von 180° in der gleichen Ebene angeordnet sind, die durch die Laserlichtquellen 31a, 31b bestrahlt werden und durch elektrisch angeregte Oszillation seitens einer Ansteuerelektronik in der Auswertungseinrichtung 41 ein dreidimensionales Scanfeld erzeugen können. Das dreidimensionale Scanfeld wird hierbei durch die Überlagerung von mindestens zwei zweidimensionalen Scanfeldern hervorgerufen. Die zwei zweidimensionalen Scanfelder können hierbei zeilen- und spaltenweise aufgebaut werden oder auch in anderer geeigneter Art, wie z. B. bei Verwendung resonanter Anregung des Ablenkelements in Form einer Lissajous-Figur. Zur Erhöhung der Systemauflösung kann zusätzlich das dreidimensionale Scanfeld auch durch drei kardanisch aufgehängte mikromechanische Aktoren, der optische Achsen im Winkel von 120° in der gleichen Ebene angeordnet sind, erzeugt werden.

Die von dem Scanfeld erzeugten Reflexionen an der auftreffenden Oberfläche werden mit den Photodetektoren 11a, 11b, deren Empfindlichkeit vorzugsweise der Wellenlänge des eingesetzten Lasers entspricht, detektiert. Die Bewegungen eines Körpers bzw. Menschen in dem Scanfeld erzeugen durch Reflexionen des Laserlichts am Objekt bzw. durch orts- und zeitaufgelöste Hintergrundintensitätsänderungen Intensitätsänderungen an den Photodetektoren 11a, 11b, welche durch die Auswerteelektronik in der Auswertungseinrichtung 41 in elektrische Signale zur Steuerung eines komplexen Roboters umgewandelt werden.

Fig. 4a erläutert ein Ausführungsbeispiel der Lichtstrahlbewegungseinrichtung 21. Dort sind ein Substrat 206, zwei Anker 211, zwei Torosionsfedern 221, eine Spiegelplatte 231, zwei Antriebselktroden 241 und ein vergrabenes Oxid 251 dargestellt. Die Anker 211 sind auf dem Sililziumsubstrat 206 aufgebracht und über die Torsionsfedern 221 mit der Spiegelplatte 231 mechanisch verbunden.

Die Antriebselektroden 241 sind von der Spigelplatte 231 elektrisch isoliert, und deren vertikale Seiten bilden mit dieser jeweils einen Kondensator. Die Kapazität der jeweiligen Kondensatoren hängt dabei von der Auslenkung der Spiegelplatte 231 ab. Der Ausschnitt A zeigt eine Anordnung von der Spiegelplatte 231 und der Antriebselektrode 241 dataillierter.

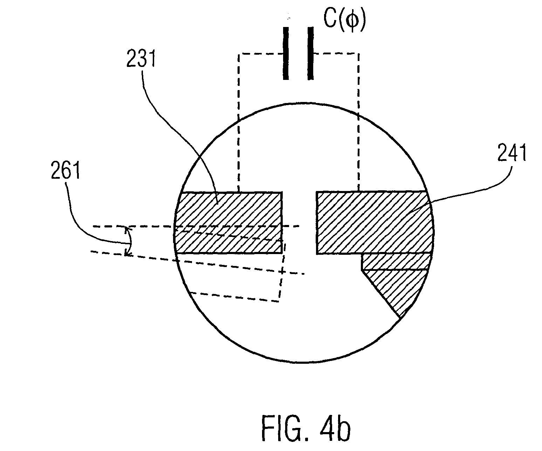

In Fig. 4b ist der Übergang zwischen der Antriebselektrode 241 und der Spiegelplatte 231 näher erläutert. Dort ist auch zu erkennen, daß die Kapazität des aus den beiden Elementen gebildeten Kondensators mit einem zunehmenden Torsionswinkel 261 abnimmt. Mit steigendem Torsionswinkel sinkt die sich überlappende Plattenfläche des aus der Spiegelplatte 231 und der Antriebselektrode 241 gebildeten Kondenators.

Durch fertigungsbedingte Unsymmetrien der Übergänge zwischen den Antriebselektroden 241 und der Spiegelplatte 231 tritt ein Anschwingen der Spiegelplatte 231 auf. Die Torisionsfedern erzeugen dabei ein der Auslenkung bzw. Verkippung der Spiegelplatte 231 entgegenwirkendes Drehmoment. Die auf den Kondensatorplatten vorhandenen Ladungen unterschiedlichen Vorzeichens führen zu einer gegenseitigen Anziehung der Antriebselektrode 241 und der Spiegelplatte 231, und damit ebenfalls zu einem der Verkippung der Spiegelplatte 231 entgegenwirkenden Drehmoment. Die Spannung zwischen der Spiegelplatte 231 und den Antriebselektroden 241 ist dabei so gewählt, daß diese beim Schwingen nur in der Zeitspanne zwischen dem Umkehrpunkt, an dem die Spiegelplatte ihre maximale Auslenkung erfährt, und dem Nulldurchgang, dem Zeitpunkt an dem die maximale Kapazität des aus der Spiegelplatte 231 und der Antriebselektrode 241 gebildeten Kondensators anliegt, auftritt. Somit wird dem schwingenden System nur in dieser Zeitspanne Energie zugeführt. Wäre diese Spannung auch in der Zeitspanne zwischen dem Nulldurchgang und dem Umkehrpunkt angelegt, so würde die elektrostatische Anziehungskraft zwischen den Kondensatorplatten der Antriebselektrode 241 und der Spiegelplatte 231 zu einer Dämpfung der Schwingung führen.

Obige Ausführungsbeispiele haben gezeigt, dass das Eingabe- bzw. Steuergerät für elektronische Geräte und Systeme gemäß der vorliegenden Erfindung das Zusammenspiel mikromechanischer Aktoren und optoelektronischer Sensoren ausnutzt, wobei hier mikromechanische Aktoren Bauelemente darstellen, die für die kontinuierliche oder quasi-statische Ablenkung von Licht, die Strahlpositionierung, das Schalten von Licht zwischen verschiedenen Empfängern, die Bestimmung von Kräften, Beschleunigungen, Bewegungen oder der Position wie Verkippung oder Auslenkung oder für andere Anwendungen konzipiert sind. Außerdem setzen obige Ausführungsbeispiele optoelektronische Sensoren ein, die für die messtechnische Erfassung optischer Signale, deren Umwandlung in eine repräsentativ elektrische Größe sowie deren Quantisierung konzipiert sind. In obigen Ausführungsbeispielen der vorliegenden Erfindung führt das Zusammenwirken solcher mikromechanischer Aktoren und optoelektronischer Sensoren zur Bestimmung der Position und/oder der Bewegung eines Objekts, welches sich in einem durch- ein mikromechanisches Bauelement erzeugten Scanfeld befindet und letztlich zur Steuerung elektronischer Geräte und Systeme mit Hilfe der gewonnenen Daten. Die Anordnung eines solchen Systems erlaubt es Eingabegeräten im Vergleich zu existierenden Lösungen, die mit Hilfe der Aufnahme von Bildern des menschlichen Körpers und deren Auswertung durch kostenintensive Kameras arbeiten, kostengünstig, hochintegriert, hochpräzise und verschleißfrei herzustellen.

In obigen Ausführungsbeispielen wird ein Verfahren sowie eine Anordnung zur Umsetzung des Verfahrens erläutert, mit dem der Benutzer eines elektronischen Geräts dies einfach, intuitiv, direkt und ohne taktile Eingabegeräte steuern kann. Das Verfahren sowie die Anordnung sollten dabei mit hoher Präzision und möglichst in Echtzeit die des Bedieners gewünschten Aktionen umsetzen können. Die Anordnung soll die Bewegung und/oder die Position eines Objekts bzw. Körperteils detektieren und in zur Steuerung elektronischer Geräte geeignete elektronische Signale umwandeln.

Dies lässt sich dadurch realisieren, dass ein oder mehrere kardanisch aufgehängte mikromechanische Aktoren ein zweidimensionales Scanfeld oder zwei überlagerte zweidimensionale Scanfelder ein dreidimensionales Scanfeld, durch Ablenkung eines Laserstrahls bzw. mehrerer Laserstrahlen erzeugen. Hierbei arbeitet das Gerät nach dem Prinzip eines Scanners, welches in der Lage ist, Helligkeitsinformationen von Punkten oder Punktwolken im ein-, zwei- oder dreidimensionalen Raum zu erlangen. Ein in dem Scanfeld befindliches Objekt bzw. Körperteil verursacht Reflexionen und Absorptionen von dem durch den Spiegel abgelenkten Laserstrahl und erzeugt somit bezüglich relativ eines oder mehrerer feststehender Punkte, an dem sich vorzugsweise ein oder zwei optische Sensorelemente befinden, Intensitätsänderungen. Zur Detektion von Intensitätsänderungen und deren Interpretation bezüglich der Steuerung elektrischer Geräte wird ein 2D-Scanner bzw. zweidimensionaler Scanner sowie eine Empfängerdiode benötigt. Um die Benutzeroberfläche auf den dreidimensionalen Raum zu erweitern, werden zwei 2D-Scanner, falls die Abschaltung nicht berücksichtigt werden soll, reicht ein 2D-Scanner aus, sowie ein CCD-Sensor bzw. Charged-Coupled-Device-Sensor benötigt. Dies ermöglicht die Raumtiefe mittels Triangulation zu erfassen. Greift man auf das Verfahren der Laufzeitmessung zurück, so genügen zwei 2D-Scanner, wenn hier nicht die Abschaltung berücksichtigt werden soll, ist sogar ein 2D-Scanner ausreichend und eine Photodiode. Dabei müssen aber die abgelenkten Laserstrahlen gepulst werden, damit die Lichtlaufzeit zwischen Scannerspiegel, Objekt und Empfangsdiode bestimmt werden kann, woraus letztlich die Entfernung zu dem Objekt resultiert.

Diese Intensitätsänderungen werden dann von dem optischen Sensorelement bzw. mehreren optischen Sensorelementen in ein elektrisches Signal umgewandelt. Ausgehend von dem bekannten Ablenkwinkel des mikromechanischen Aktors bzw. der Aktoren sowie den detektierten Intensitätsänderungen mittels der optischen Sensorelemente, der Tiefenmessung und einer geeigneten Auswerteelektronik ist es möglich, die Position und/oder die Bewegung eines in dem Scanfeld befindlichen Objekts bzw. Körperteils zu bestimmen. Der Vorteil der Verfahren gemäß den obigen Ausführungsbeispielen ist, dass Detektions- und Projektionseinheit in einem Bauelement, dem mikromechanischen Aktor, zusammengefasst werden können. Das heißt, der Scanner ist in der Lage, die graphische Benutzeroberfläche auf verschiedene Unterlagen zu projizieren sowie gleichzeitig das Objekt abzuscannen.

Ein weiterer Vorteil ist der Einsatz nur eines CCD-Sensors bzw. Charged-Coupled-Device-Sensors bei 3D-Anwendungen mittels Triangulation bzw. einer Empfängerdiode bei Laufzeitmessung.

In obigen Ausführungsbeispielen sind Anordnungen zur Steuerung elektronischer Geräte durch optoelektronische Bewegungsdetektion einer Hand oder eines Fingers im zweidimensionalen Raum oder im dreidimensionalen Raum eine Anordnung zur Bewegungserkennung eines Objekts zur Steuerung eines komplexen Roboters dargestellt. Die Bewegung einer Hand oder eines Fingers kann dabei ein elektronisches Gerät unmittelbar steuern oder über die gleichzeitige Projektion einer virtuellen numerischen Taste mittelbar. Außerdem kann über ein sogenanntes dreidimensionales Scannen eines Körpers ein komplexer Roboter gesteuert werden.

In obigen Ausführungsbeispielen wurden Systeme zur optischen Erfassung von Bewegungen und Positionserfassungen des menschlichen Körpers bzw. der Körperteile zur Steuerung der elektronischen bzw. elektronisch steuerbaren Geräten durch die optische Erfassung auf einer mikromechanischen Ablenkeinheit ausgeführt, welche das zur Erfassung in Frage kommende Feld definiert und die aus dem Feld reflektierte Strahlung mittels eines oder mehrerer Detektoren in ein elektrisches Signal umwandelt.

In obigen Ausführungsbeispielen wird zusätzlich Information über die Ablenkeinheit bzw. die Lichtstrahlbewegungseinrichtung in das Feld hineinprojiziert. Dabei kann in das Feld eine virtuelle Bedieneroberfläche, wie z. B. eine Tastatur, projiziert werden, oder es können die Umrisse eines virtuellen Mauspads über die Lichtstrahlbewegungseinrichtung 21 in das Feld projiziert werden. Darüber hinaus kann über die Lichtstrahlbewegungseinrichtung 21 eine zusätzlich erzeugte virtuelle Bedienoberfläche einer graphischen Benutzeroberfläche eines elektronischen Geräts dem Steuerfeld überlagert werden, um die Funktion eines Touchscreens zu erreichen.

In obigen Ausführungsbeispielen kann das System aber auch so ausgeführt werden, dass es in der Lage ist, genetische Merkmale zu erkennen, z. B. einen Fingerabdruck, um damit den Bediener zu identifizieren. Außerdem kann das System in obigen Ausführungsbeispielen so ausgeführt werden, dass es in der Lage ist, Bewegungen bzw. Positionen im eindimensionalen Raum zu erfassen oder Positionen, Lagen und Bewegungen im zweidimensionalen Raum zu erfassen. Darüber hinaus kann das in obigen Ausführungsbeispielen erläuterte System auch Bewegungen im dreidimensionalen Raum erfassen. Das in dem obigen Ausführungsbeispielen vorgestellte System ist in der Lage, mit IBM-kompatiblen PCs zu korrespondieren, von diesen angesprochen bzw. ausgelesen zu werden. Die Kommunikation des Systems mit einem externen Gerät kann hierbei vorzugsweise über eine typische PC-Schnittstelle, wie z. B. eine USB-Schnittstelle, eine PS/2-Schnittstelle oder eine RS232-Schnittstelle erfolgen.

Der in obigen Ausführungsbeispielen eingesetzte Laser kann in alternativer Form als eine beliebige Lichtquelle ausgeführt sein, die ein Licht erzeugt, das von der Lichtstrahlbewegungseinrichtung 21 abgelenkt wird. Auch die Photodiode 91 kann durch einen beliebigen lichtempfindlichen Sensor ersetzt werden, der ein elektrisches Signal auf das Auftreffen eines Lichtstrahls hin erzeugt.

Alternativ zu dem Aktor 21 kann die Position des Spiegels 81 auch über weitere Einrichtungen, die ein elektrisches Signal ein eine mechanische Positionsänderung umsetzen, wie z. B. einen Elektromotor, ausgeführt sein. Die in obigen Ausführungsbeispielen aufgeführten Körperteile wie die Hand (61) bzw. in Fig. 3 der menschliche Körper (201) können durch beliebige andere Objekte oder vor allem auch Stifte, die eine präzise Eingabe von Informationen ermöglichen, alternativ ausgeführt sein.

## Patentansprüche

1. Vorrichtung zum Steuern eines Geräts (51) abhängig von einer Position oder Bewegung eines Objekts (61) in einem Steuerbereich (1) mit folgenden Merkmalen:
einer Lichtstrahlbewegungseinrichtung (21) zum Bewegen eines Lichtstrahls in dem Steuerbereich (1) abhängig von einem Lichtstrahlbewegungssignal (111), um den Lichtstrahl über den Steuerbereich (1) zu führen, wobei verschiedene Positionen oder Positionsänderungen des Objekts oder mehrerer Objekte in dem Steuerbereich (1) verschiedenen Reaktionen in dem Gerät (51) zugeordnet sind;
einem Lichtsensor (11) zum Erfassen eines reflektierten Lichtstrahls (131, 141, 161, 171), um ein Sensorausgangssignal (121) zu erzeugen, das von dem reflektierten Lichtstrahl (131, 141, 161, 171) abhängt; und
einer Steuersignalerzeugungseinrichtung (41), die ausgebildet ist, um abhängig von dem Lichtstrahlbewegungssignal (111) und dem Sensorausgangssignal (121) ein Steuersignal (151) für das Gerät (51) zu erzeugen, das ausgebildet ist, um in dem Gerät (51) eine Reaktion zu bewirken, die einer Position oder Positionsänderung in dem Steuerbereich (1) zugeordnet ist, die durch das Lichtstrahlbewegungssignal (111) und das Sensorausgangssignal (121) definiert ist;
wobei die Lichtstrahlbewegungseinrichtung (21) und der Lichtsensor (11) auf einer Seite des Steuerbereichs (1), auf der das Objekt (61) in den Steuerbereich (1) eingebracht werden kann, angeordnet sind.

2. Vorrichtung zum Steuern eines Geräts (51) gemäß Anspruch 1, wobei die Steuersignalerzeugungseinrichtung (41) ausgebildet ist, einen zeitlichen Verlauf des Sensorausgangssignals (121) mit einem zeitlichen Verlauf des Lichtstrahlbewegungssignals (111) zu vergleichen und daraus in dem Gerät (51) eine Reaktion zu bewirken.

3. Vorrichtung zum Steuern eines Geräts gemäß einem der Ansprüche 1 bis 2, bei der die Lichtstrahlbewegungseinrichtung (21) schwenkbar an einem festen Ort gegenüber dem Steuerbereich (1) angeordnet ist.

4. Vorrichtung zum Steuern eines Geräts (51) gemäß Anspruch 3, bei der der Lichtsensor (11) an einem festen Ort gegenüber dem Steuerbereich (1) angeordnet ist.

5. Vorrichtung zum Steuern eines Geräts (51) gemäß einem der Ansprüche 3 oder 4, mit folgenden Merkmalen:
einer weiteren Lichtstrahlbewegungseinrichtung (21b), die schwenkbar an einem festen Ort gegenüber dem Steuerbereich (1) angeordnet und von der Lichtstrahlbewegungseinrichtung beabstandet ist, zum Bewegen eines weiteren Lichtstrahls in dem Steuerbereich (1) abhängig von einem weiteren Lichtstrahlbewegungssignal (111b), um den weiteren Lichtstrahl nacheinander an verschiedenen Positionen in dem Steuerbereich (1) zu platzieren;
einem weiteren Lichtsensor (11b) zum Erfassen eines weiteren reflektierten Lichtstrahls (181, 191), um ein weiteres Sensorausgangssignal (121b) zu erzeugen, das von dem weiteren reflektierten Lichtstrahl (181, 191) abhängt; und
einer Steuersignalerzeugungseinrichtung (41), die ausgebildet ist
um abhängig von dem Lichtstrahlbewegungssignal (111a) und dem Sensorausgangssignal (121a) ein erstes zweidimensionales Abbild des Steuerbereichs zu erzeugen und abhängig von dem weiteren Lichtstrahlbewegungssignal (111b) und dem weiteren Sensorausgangssignal (121b) ein zweites zweidimensionales Abbild des Steuerbereichs (1) zu erzeugen
um aus einer Überlagerung des ersten und des zweiten zweidimensionalen Abbilds ein dreidimensionales Abbild zu erzeugen, das in einer Abschattung reduziert ist;
und
um aus dem dreidimensionalen Abbild ein Steuersignal (151) für das Gerät (51) zu erzeugen, das ausgebildet ist, um in dem Gerät (51) eine Reaktion zu bewirken, die einer dreidimensionalen Position oder Positionsänderung des Objekts (201) in dem Steuerbereich (1) zugeordnet ist, die durch die Überlagerung des ersten und des zweiten zweidimensionalen Abbilds definiert ist.

6. Vorrichtung zum Steuern eines Geräts gemäß Anspruch 5, bei der der weitere Lichtsensor (11b) an einem festen Ort gegenüber dem Steuerbereich (1) angeordnet ist.

7. Vorrichtung zum Steuern eines Geräts (51) gemäß einem der Ansprüche 5 oder 6, bei der die weitere Lichtstrahlbewegungseinrichtung (21b) auf einer der Lichtstrahlbewegungseinrichtung (21a) abgewandten Seite des Steuerbereichs (1) angeordnet ist.

8. Vorrichtung zum Steuern eines Geräts (51) gemäß einem der Ansprüche 1 bis 7, bei der die Lichtstrahlbewegungseinrichtung (21) eine Reflexionseinrichtung (81) umfasst, deren Position oder Ausrichtung durch einen Aktor (71), der ausgebildet ist, um von dem Lichtstrahlbewegungssignal (111) gesteuert zu werden, so steuerbar ist, dass der Lichtstrahl nacheinander an verschiedenen Positionen in dem Steuerbereich (1) platziert werden kann.

9. Vorrichtung zum Steuern eines Geräts (51) gemäß Anspruch 8, bei der das Lichtstrahlbewegungssignal (111) ein oszillierendes Signal umfasst.

10. Vorrichtung zum Steuern eines Geräts (51) gemäß einem der Ansprüche 1 bis 9, bei der die Steuersignalerzeugungseinrichtung (41) eine Messung einer Laufzeit, die der Lichtstrahl von der Lichtstrahlbewegungseinrichtung zu dem Lichtsensor benötigt, ausführt.

11. Vorrichtung zum Steuern eines Geräts (51) gemäß einem der Ansprüche 1 bis 10, bei der die Lichtstrahlbewegungseinrichtung (21) und der Lichtsensor (11) in einem Bauelement integriert sind.

12. Vorrichtung zum Steuern eines Geräts (51) gemäß einem der Ansprüche 1 bis 11, bei dem die Positionen in dem Steuerbereich (1) in Zeilen- oder Spaltenform angeordnet sind.

13. Computermaus, die die Vorrichtung gemäß einem der Ansprüche 1 bis 12 umfasst.

14. Tastatur, die die Vorrichtung gemäß einem der Ansprüche 1 bis 12 umfasst.

15. Verfahren zum Steuern eines Geräts (51) abhängig von einer Position oder Bewegung eines Objekts (61) in einem Steuerbereich (1) mit folgenden Schritten:
Bewegen eines Lichtstrahls in dem Steuerbereich (1) abhängig von einem Lichtstrahlbewegungssignal (111), um den Lichtstrahl über den Steuerbereich (1) zu führen durch eine Lichtstrahlbewegungseinrichtung (21), wobei verschiedene Positionen oder Positionsänderungen des Objekts oder mehrerer Objekte in dem Steuerbereich (1) verschiedenen Reaktionen in dem Gerät zugeordnet sind;
Erfassen eines reflektierten Lichtstrahls (131, 141, 161, 171) in einem Lichtsensor (11) und Erzeugen eines Sensorausgangssignals (121), das von dem reflektierten Lichtstrahl (131,141, 161, 171)abhängt; und
Erzeugen eines Steuersignals (151) für das Gerät (51) in Abhängigkeit von dem Lichtstrahlbewegungssignal (111) und dem Sensorausgangssignal (121), um in dem Gerät (51) eine Reaktion zu bewirken, die einer Position oder Positionsänderung in dem Steuerbereich (1) zugeordnet ist, die durch das Lichtstrahlbewegungssignal (111) und das Sensorausgangssignal (121) definiert ist;
wobei die Lichtstrahlbewegungseinrichtung (21) und der Lichtsensor (11) auf einer Seite des Steuerbereichs (1), auf der das Objekt (61) in den Steuerbereich (1) eingebracht werden kann, angeordnet sind.
